Europäisches Patentamt

(19) European Patent Office

Office européen des brevets

(11) **EP 0 966 127 A1**

(12) **EUROPEAN PATENT APPLICATION**
published in accordance with Art. 158(3) EPC

(43) Date of publication:
**22.12.1999 Bulletin 1999/51**

(51) Int. Cl.6: **H04L 9/32**, H04N 5/91

(21) Application number: **98961646.1**

(86) International application number:
**PCT/JP98/06007**

(22) Date of filing: **28.12.1998**

(87) International publication number:
**WO 99/35786 (15.07.1999 Gazette 1999/28)**

(84) Designated Contracting States:
**DE FR GB**

(30) Priority: **07.01.1998 JP 134398**

(71) Applicant: **Sony Corporation**
**Tokyo 141-0001 (JP)**

(72) Inventors:
 • **ISHIGURO, Ryuji,**
 **Sony Corporation**
 **Tokyo 141-0001 (JP)**

 • **OSAWA, Yoshitomo,**
 **Sony Corporation**
 **Tokyo 141-0001 (JP)**
 • **ASANO, Tomoyuki,**
 **Sony Corporation**
 **Tokyo 141-0001 (JP)**

(74) Representative:
 **Turner, James Arthur et al**
 **D. Young & Co.,**
 **21 New Fetter Lane**
 **London EC4A 1DA (GB)**

(54) **DATA PROCESSING SYSTEM, DATA PROCESSING DEVICE AND DATA PROCESSING METHOD**

(57) A first information processing apparatus 1, storing a service key and a pre-set function, requests the proper identification information from a second information processing apparatus 2, storing the proper identification information, a license key, version data indicating a version of the license key, and the above pre-set function, and applies the function to the identification information and the service key to generate the first intermediate key Km. The first information processing apparatus applies the function to the first intermediate key n times to generate a decision key Kmn and to transmit number of times data indicating the number of times of application of the function. The second information processing apparatus 2 applies the function to the license key (n — Gb) times to generate the second intermediate key Klic_n and to transmit the intermediate key information R as the information on the second intermediate key Klic_n. The first information processing apparatus authenticates the second information processing apparatus 2 based on the decision key Kmn and the intermediate key information R.

FIG.1

EP 0 966 127 A1

Printed by Xerox (UK) Business Services
2.16.7/3.6

## Description

Technical Field

This invention relates to an information processing system, an information processing apparatus and an information processing method. More particularly, it relates to an information processing system, an information processing apparatus and an information processing method that can be used with advantage in the authentication protocol used in copyright protection.

Background Art

It has recently been proposed to interconnect electronic equipments, such as AV equipments or personal computers, over an IEEE1394 serial bus, to enable reciprocal data transmission/reception.

In such system, an act of users in general outputting the reproduced motion picture information from a DVD player on a monitor over a 1394 digital bus for display is permitted to the copyright owner of the motion picture information at the time point of purchase of the DVD. However, the act of recording the motion picture information reproduced from the DVD player on a recording medium, such as a magneto-optical disc, requires a special permission from the copyright owner. In such case, the usual practice is to store a key in a magneto-optical disc device indicating whether or not recording of the motion picture information is permitted and to use this key to authenticate whether or not the magneto-optical disc device is an authentic device, that is whether or not the magneto-optical disc deice is an apparatus licensed by the copyright owner, so that the recording of the motion picture information will be allowed only for the authenticated magneto-optical disc device, in such case, it is necessary to perform authentication processing between an apparatus transmitting the motion picture information, referred to hereinafter as a source, and an apparatus receiving the transmitted motion picture information, referred to hereinafter as a sink, in order to verify whether or not the counterpart is an authentic apparatus.

For copyright protection in such case, a variety of authentication systems have been proposed. In an authentication protocol, used in these authentication systems, an encryption algorithm is frequently used.

The authentication protocol, employing this encryption algorithm, is disclosed in the Japanese Patent Applications Nos. H-9-207953 and H-9-210899 entitled "Information Processing Apparatus, Information Processing Method, Information Processing System and Recording Medium", assigned to the present Assignee, corresponding to US Ser. No. 09/059,757, filed on April 14, 1998 and US. Ser. No. 09/059,812 entitled "Information Processing Apparatus, Information Processing method, Information Processing System and Recording Medium" filed on the same date. Meanwhile, in nations such as Japan and USA, a ban is placed on exporting powerful encryption algorithms. Thus, if an encryption algorithm is used in an authentication protocol, problems may arise that the system cannot be exported or used in the imported systems.

It is an object of the present invention to provide an information processing system, an information processing apparatus and an information processing method that are able to perform the authentication protocol using a pre-set function.

Disclosure of the Invention

In one aspect, the present invention provides an information processing system including a first information processing apparatus and a second information processing apparatus. The first information processing apparatus includes first storage means for storing a service key and a pre-set function, first transmission/reception means for transmitting and receiving data with the second information processing apparatus, first intermediate key generating means for generating a first intermediate key by applying the above function to the service key and to the identification information proper to the second information processing apparatus received by the first transmission/reception means from the second information processing apparatus, decision key generating means for generating a decision key by applying the function n times to the first intermediate key, number of times data transmitting means for causing the first transmission/reception means to transmit to the second information processing apparatus the number of times data indicating the number of times the function is applied by the decision key generating means to the first intermediate key, and authentication means for authenticating the second information processing apparatus by verifying whether or not the decision key is equal to the intermediate key information received by the first transmission/reception means from the second information processing apparatus. The second information processing apparatus includes second storage means for storing the proper identification information allocated to itself, a license key generated on applying the function to the first intermediate key Gb times, where Gb is a natural number, version data indicating the version of the license key and the pre-set function, second transmission/reception means for sending and receiving data with the first information processing apparatus, second intermediate key generating means for generating the second intermediate key by applying the function to the license key $(n - Gb)$ times, using the number of times data received by the first information processing apparatus by the second transmission/reception means, and intermediate key information transmitting means for causing the second transmission/reception means to transmit the intermediate key information concerning the second intermediate key by the second transmission/reception means to the first information processing apparatus.

In another aspect, the present invention provides an information processing method in an information processing system made up of a first information processing apparatus holding on memory a service key and a pre-set function, and a second information processing apparatus holding on memory the proper identification information allocated to itself, a license key generated on applying the function to the first intermediate key Gb times, where Gb is a natural number, version data specifying the version of the license key, and the pre-set function. The information processing method includes an identification information requesting step of requesting the identification information proper to the second information processing apparatus from the first information processing apparatus to the second information processing apparatus, an identification information transmission/reception step of transmitting the identification information proper to the second information processing apparatus from the second information processing apparatus for reception by the first information processing apparatus, a first intermediate key generating step of applying the function in the first information processing apparatus to the identification information proper to the second information processing apparatus, received in the identification information transmission/reception step, and on the service key, to generate the first intermediate key, a decision key generating step of generating a decision key by applying the function in the first information processing apparatus to the first intermediate key n times, where n is an integer, a number of times data transmission/reception step of transmitting the number of times data indicating the number of times the function is applied to the first intermediate key at the decision key generating step from the first information processing apparatus for reception by the second information processing apparatus, a second intermediate key generating step of generating a second intermediate key Klic_n by applying the function to the license key (n — Gb) times using the number of times data received by the number of times data reception step in the second information processing apparatus, an intermediate key information transmission/reception step of transmitting the intermediate key information as the information concerning the second intermediate key from the second information processing apparatus for reception by the first information processing apparatus, and an authentication step of authenticating the second information processing apparatus by verifying, at the first information processing apparatus, whether or not the decision key is equal to the intermediate key information received at the intermediate key information transmission/reception step.

In a still another aspect, the present invention provides an information processing apparatus including storage means for storing a service key and a pre-set function, transmission/reception means for transmitting and receiving data with another information processing apparatus, intermediate key generating means for generating an intermediate key by applying the function to the identification information proper to the other information processing apparatus, received by the reception means, from sand another information processing apparatus, and to the service key, to generate an intermediate key, decision key generating means for generating a decision key by applying the function to the intermediate key n times, where n is an integer, number of times data transmitting means for causing the transmission/reception means to transmit to the other information processing apparatus the number of times data indicating the number of times of application of the function to the intermediate key by the decision key generating means, and authentication means for authenticating the other information processing apparatus by verifying whether or not the decision key and the intermediate key information received by the transmission/reception means from the other information processing apparatus are equal to each other.

In a still another aspect, the present invention provides an information processing method including an identification information reception step of requesting the identification information proper to another information processing apparatus to the other information processing apparatus to receive the identification information, a first intermediate key generating step of generating a first intermediate key by applying a pre-set function to the identification information proper to the other information processing apparatus and the service key received by the identification information reception step, a decision key generating step of generating a decision key by applying the function to the first intermediate key n times, n being an integer, a number of times data transmitting step of transmitting to the other information processing apparatus the number of times data indicating the number of times of application of the function to the first intermediate key at the decision key generating step, an intermediate key information receiving step of receiving the intermediate key information generated based on the number of times data by the other information processing apparatus, and an authentication step of authenticating the other information processing apparatus by verifying whether or not the decision key is equal to the intermediate key information received by the intermediate key information receiving step.

In still another aspect, the present invention provides an information processing apparatus including storage means for storing the proper identification information assigned to itself, a license key generated by applying a pre-set function Gb times, Gb being a natural number, to a first intermediate key, version data specifying the license key and the pre-set function, transmission/reception means for transmitting and receiving data with another information processing apparatus, second intermediate key generating means for generating a second intermediate key by applying the function to the license key (n — Gb) times using the number of times data received from the other information processing apparatus by the transmission/reception means, and intermediate key information transmitting means for transmitting the intermediate key information as the information on the second intermediate key by the second transmission/reception means.

In yet another aspect, the present invention provides an information processing method including an identification information transmitting step of transmitting the proper identification information assigned to itself to another information processing apparatus, a number of times data receiving step of receiving from the other information processing apparatus number of times data n, where n is an integer, of applying a pre-set function to the identification information and to a service key for generating the first intermediate key in the other information processing apparatus, a second intermediate key generating step of generating a second intermediate key Klic_n by applying the function (n — Gb) times, using number of times data received in the number of times data receiving step, to a license key generated by applying the function Gb times to the first intermediate key, Gb being a natural number, and an intermediate key information transmission/reception step of transmitting the intermediate key information as the information on the second intermediate key.

Brief Description of the Drawings

Fig.1 is a block diagram showing an illustrative structure of an information processing system embodying the present invention.

Fig.2 is a block diagram showing a specified illustrative structure of the interior of a DVD player, a personal computer and a magneto-optical disc apparatus in the information processing system.

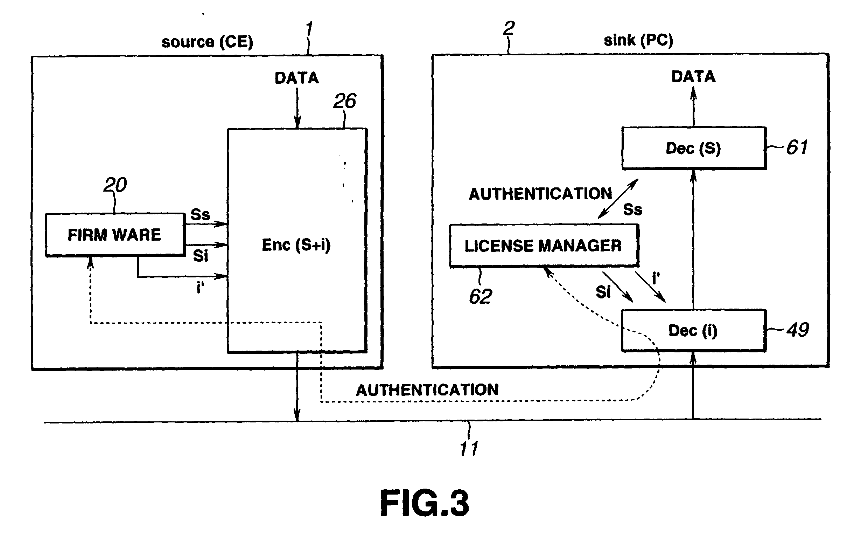

Fig.3 illustrates the sequence of authentication carried out between the source and the sink in the information processing system.

Fig.4 is a timing chart for illustrating the basic sequence of the authentication information processing system.

Fig.5 is a timing chart showing the sequence of the specified authentication protocol information processing system.

Fig.6 is a timing chart for illustrating the sequence of another authentication protocol performed between the source and the sink.

Best mode for Carrying out the Invention

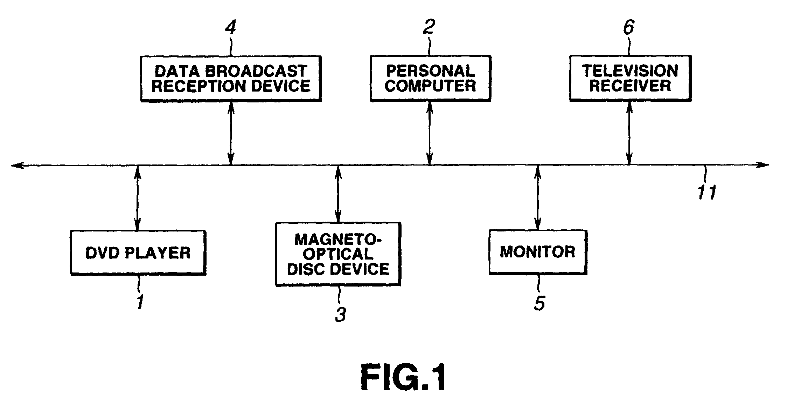

Referring to the drawings, the best mode for carrying out the present invention is explained in detail.
The present invention is applied to the information processing system shown for example in Fig.1.
The information processing system is made up of a DVD player 1, a personal computer 2, a magneto-optical disc device 3, a data broadcast receiving apparatus 4, a monitor 5 and a television receiver 6.

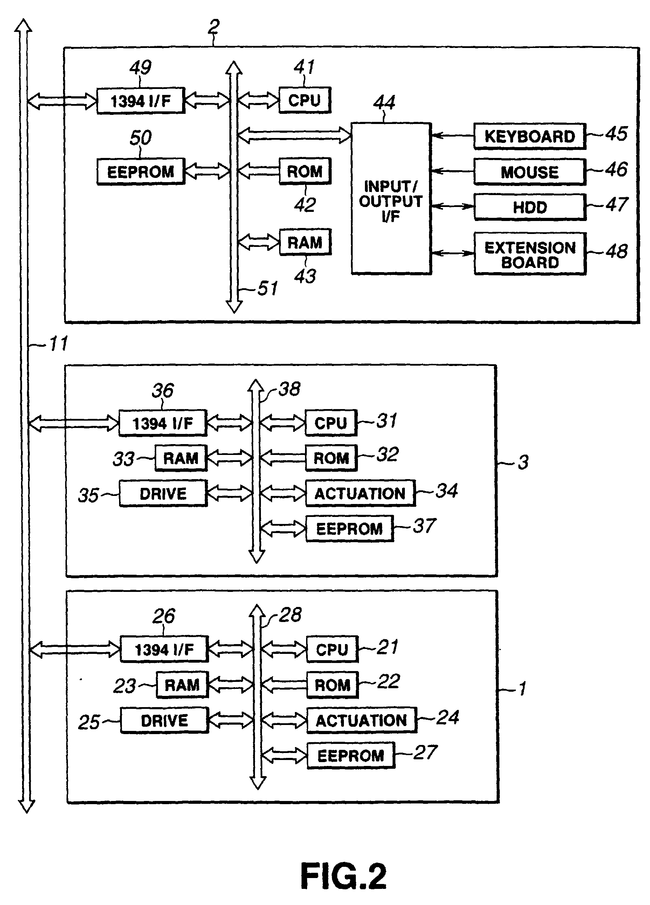

Fig.2 shows a specified illustrative internal structure of the DVD player 1, personal computer 2 and the magneto-optical disc device 3.
The DVD player 1 includes a CPU 21, a ROM 22, a RAM 23, an actuating unit 24, a drive 25, a 1394 interface 26 and an EEPROM 27.
This DVD player 1 is connected via the 1394 interface 26 to an IEEE 1394 serial bus 11. The CPU 21 executes a variety of processing operations in accordance with the program stored in the ROM 22. The RAM 23 stores data, programs etc necessary in executing the various processing operations. The actuating unit 24 is made up of a button, a switch, a remote controller etc and outputs signals associated with actuations by the user. The driver 25 drives a DVD, not shown, to reproduce the data stored therein. The EEPROM 27 is adapted to store the information required to be stored afer power down of the apparatus, such as the key information.
The magneto-optical disc device 3 includes a CPU 31, a ROM 32, a RAM 33, an actuating unit 34, a driver 35, an 1394 interface 36 and an EEPROM 37 etc interconnected over an internal bus 38. The CPU 31, a ROM 32, a RAM 33, an actuating unit 34,a drive 35, an 1394 interface 36, EEPROM 37 and the internal bus 38, making up the magneto-optical disc device 3, perform the functions equivalent to those of the CPU 21, ROM 22, RAM 23, actuating unit 24, drive 25, actuating unit 24, 1394 interface 26, EEPROM 27 and the internal bus 28, and detailed description thereof is not made for simplicity. However, the drive 35 is adapted to drive a magneto-optical disc, not shown, for recording/reproducing data therein.
The personal computer 2 includes a CPU 41, a ROM 42, a RAM 43, an input/output interface 44, a 1394 interface 49, and an EEPROM 50, interconnected over an internal bus 51, and a keyboard 45, a mouse 46, a hard disc drive (HDD) 47 and an extension board 48, connected to the input/output interface 44.
This personal computer 2 is connected to the IEEE 1394 serial bus 11 over the 1394 interface 49. The CPU 41 executes a variety of processing operations in accordance with the program stored in the ROM 42. The ROM 43 has stored therein data or programs necessary to execute the various processing operations. The input/output interface 44 is adapted to output to the CPU 41 the input signals from the keyboard 45 or the mouse 46. The input/output interface 44 is adapted to record/reproduce the data or the program from the hard disc drive (HDD) 47. On the input/output interface 44 can be attached the extension board 48 to supplement necessary functions if desired. The EEPROM 50 is adapted to store the information required to be stored even after power down, such as the key information. The internal bus 51 is constituted by, for example, PCI (Peripheral Component Interconnect) or a local bus.

Meanwhile, the internal bus 51 is opened for a user, such that the user is able to receive data transmitted over the internal bus 51 by connecting a pre-set board to the extension board 48 or by generating a pre-set software program to install the generated program in the CPU 41.

Conversely, with a consumer electronic device (CE), such as the DVD player 1 or the magneto-optical disc 3, the internal bus 28 or 38 is not opened to the user, such that, failing special remodelling, the user is unable to acquire the transmitted data.

The data exchange between the source and the sink is now explained.

The authentication processing for copyright protection is stored in a firmware 20, as one of the software programs stored from the outset in the ROM 22 of the DVD player 1, and a ROM 42 of, for example, the personal computer 2, and is executed before actual data exchange with a license manager 62 as one of the software programs processed by the CPU 41.

The personal computer 2 usually can be used with an optional program loaded thereon. There are occasions wherein an illicitly prepared application program is used. Thus, the present personal computer 2 is adapted to perform the authentication processing between the application unit 61 and the license manager 62 from one loaded application program to another. In this case, the license manager 62 and the application unit 61 operate as the source and the sink, respectively.

If the authentication processing is performed to confirm that the sink is an optimum one, encrypted real data is transferred from the source to the sink where the encrypted real data are decoded.

That is, the picture data, as real data outputted by the DVD player 1, as the source, is transmitted over the serial bus 11 for decoding.

In the DVD player 1, encryption is performed in the 1394 interface 26 in the DVD player 1 using a session key Ss and a time change key i, more correctly, a key i' for forming the time change key i. This session key Ss and the time change key i, more correctly, a key i' for forming the time change key i, are sent from the firmware 20 to the 1394 interface 26.

The session key Ss is made up of an initial key Ss, used as an initial key, and a disturbing key Si used for disturbing the time change key i. The session key Ss and the time change key i are constituted using upper and lower bits of the encrypting key sk (=sk') of a pre-set number of bits generated by the authentication processing as later explained. This session key S, updated every session, for example, every motion picture information or every reproducing event, is not changed within the same session. Conversely, the time change key i made up of the disturbing key Si and the key i', is updated frequently in one session. For example, the time information etc is used as this key.

The real key, thus encrypted, is transmitted via IEEE 1394 serial bus 11 and received by the 1394 interface 49 of the personal computer 2. In the personal computer 2, the license manager 62 sends the initial value key Ss of the session key S to the application unit 61, while sending the disturbing key Si and the time change key i (more correctly, the key i' for generating the time change key i) to the 1394 interface 49. In the 1394 interface 49, the time change key i is generated from the disturbing key Si and the key i' and is used to perform the first-stage decoding. The decoded real-data are second-stage-decoded in the application unit 61 using the session key S (more correctly, the initial value key Ss).

In the personal computer 2, since the internal bus 51 is opened to the user, data in the internal bus 51 tends to be accessed from outside to raise an inconvenience. Therefore, only the first-stage decoding is done in the application unit 61, with the real data being still in the encrypted state. The application unit 61 then performs second-stage decoding to give a completely decrypted plane sentence. Tis prohibits the data exchanged in the internal bus 51 from being copied on the hard disc 47 or other device.

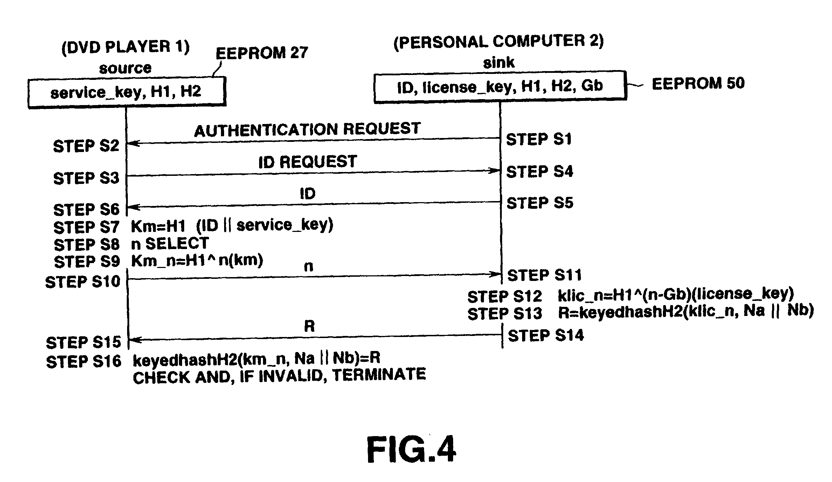

Fig.4 shows the basic sequence of the authentication processing performed between the source (DVD player 1) and the sink (personal computer 2).

In the EEPROM 27 of the DVD player 1, as the source, there are pre-stored a service key (Service_key) and hash functions (H1, H2). These are accorded to the user of the DVD player 1 by the copyright owner and are kept in confidentiality in the EEPROM 11.

The service key is given from one information purveyed by the copyright owner
to another and is common in the system constituted by the IEEE 1394 serial bus 11.

The hash function is such a function which outputs data of fixed length, such as 64 bit data or 128 bit data, for input data of an optional length and in which, if y (=hash(x)) is given, it is difficult to find x and it is also difficult to find a set of x1 and x2 such that hash(x1) = hash(x2). Typical of known unidirectional hash functions are MD (message Digest) 5 and SHA(Soecure Hash Algorithm). This unidirectional hash function is discussed in detail in Bruce Schneier, "Applied Cryptography (Second Edition".

In the personal computer 2, as the source, there are kept in confidentiality the identification number IS proper to itself, a license key (license_key), hash functions (H1, H2) and data Gb indicating the version of the license key (license_key).

The license key (license_key) is a value obtained on applying the hash function H1 Gb times to a coupling data (IS‖ Service_key) obtained on coupling n-bit identification number (ID) to in-bit service key (Service_key). That is, the license key (license_key) is expressed by the following equation:

$$license\_key = H1^{\wedge}Gb(ID‖Service\_key)$$

where H1^Gb indicates application of the hash function Gb times.

As the identification number (ID), node_unique_ID, specified in, for example, the standard for the IEEE 1394 serial bus 11, may be used. This node_unique_ID is constituted by 8 bytes (64 bits), of which the upper three bytes are managed by the IEEE and accorded proper values from the IEEE for different manufacturers of the electronic equipments, and the lower five bytes can be accorded by the respective manufacturers to the apparatus furnished to the users. The respective manufacturers serially accord a number to each apparatus for the lower five bytes and, if the five bytes have been used up, the respective manufacturers are accorded node_unique_ID the upper order three bytes present different numbers, so that the lower five bytes thereof are used to assign a number to each apparatus. Therefore, this node_unique_ID differs from apparatus to apparatus, irrespective of the manufacturers, and is unique to each apparatus.

Referring to Fig.4, the authentication processing, executed prior to transmission and reception of real data, is explained.

At step S1, the license manager 62 of the personal computer 2 controls the 1394 interface 49 to transmit the authentication request to the DVD player 1 over the IEEE 1394 serial bus 11.

At step S2, the firmware 20 of the DVD player 1 receives the authentication request. At the next step S3, the firmware 20 requests the identification number (ID) to the personal computer 2 to execute the authentication processing.

At step S4, the license manager 62 of the DVD player 1 receives the request for identification (ID) and, in response thereto, reads out the identification number (ID) stored in the EEPROM 50 to send the read-out identification number to the DVD player 1.

At step S6, the firmware 20 of the DVD player 1 receives the identification number (ID). At step S7, the firmware 20 reads out the license key (license_key) stored in the EEPROM 27 to connect the received identification number (ID) to the license key (license_key) to generate the coupling data of which upper bits are identification numbers (ID) and lower bits are license key (license_key). The firmware 20 then applies the hash function H1 to the generated coupling data (ID‖ Service_key) by:

$$Km = H1 (ID‖Service\_key)$$

to generate a key Km.

At the next step S8, the firmware 20 of the DVD player 1 selects a variable n which will satisfy $0 \leq n \leq C1$, where n, pre-set so as to satisfy $0 \leq n \leq C1$, need not be selected at step S8. C1 is a constant pre-set in the system. At step S9, the firmware 20 applies the hash function H1 n times for the key Km generated at step S7 as shown by the following equation:

$$Km\_n = H1^{\wedge}n(Km)$$

to generate the key Km_n. It is noted that H1^n denotes that the hash function H1 is applied n times, such that, for n = 0, Km_n= Km. Also, at step S31, the firmware 20 generates a random number Na. At step S10, the firmware 20 sends a variable n to the personal computer 2.

At step S11, the license manager 62 of the personal computer 2 receives the variable n at step S34, then applies the hash function H1 to the license key (license_key) stored in the EEPROM 50 (n — Gb) times, as indicated by the following equation:

$$Klic\_n = H1^{\wedge}n(n — Gb) (license\_key)$$

to generate the key Klic_n.

Meanwhile, n in (n — Gb) is the variable n received at step S11, while Gb is the information specifying the version of the license key (license_key) stored in the EEPROM 50 of the personal computer 2. As discussed in the foregoing, the license key (license_key) is generated on applying the hash function H1 Gb times to the coupling data (ID‖Service_key))obtained on coupling the n-bit identification number (ID) to the m bit service key (Service_key). Therefore, the key Klic_n, generated on applying the hash function (n —Gb) times to the license key (license_key), is Klic_n = license_key for (n — Gb) =0 , such that, for (n — Gb) ≥ 0, the key Klic_n is equal to Km_n, obtained on applying the hash function H1 to the coupling data (ID‖Service_key)) n times.

If (n — Gb) < 0, the operation is tantamount to applying the hash function a negative number of times, that is to finding the inverse function of the hash function, as described above. However, it is difficult to find the inverse function of the hash function, as discussed above. Therefore, if (n —Gb) < 0, it is practically impossible to generate the key Klic_n. Thus, if this property is used, it is possible to manage the version information Gb of the license key (license_key). For example, if an equipment having a high secrecy-keeping function and an equipment having a low secrecy-keeping function are present as a sink-side device, "1" and "2" are accorded as the version information Gb of the license key (license_key) to the equipment having a high secrecy-keeping function and to the equipment having a low secrecy-keeping function, respectively. If the license key (license_key) of Gb = 2 accorded to the equipment having a low secrecy-keeping function is discovered by an unauthorized user, the source side can select "1" for the variable n whereby (n — Gb) < 0 for the equipment having a low secrecy-keeping function which thus is unable to generate the key Klic_n so that it is not authenticated.

Therefore, if the higher-order license key (license_key) with a larger value of the version information Gb is accorded to the equipment having a low secrecy-keeping function, so that, if the license key (license_key) has become apparent, the processing for setting the sink having the higher-order license key out of the range of authentication can be carried out on the source side by selecting the variable n.

At step S13, the license manager 62 applies to the keydash function H2, having the key Klic_n as the key, the data (Na∥Nb) of which the upper bits are of a first value Na and lower bits are of a second value Nb, to generate a response R such that

$$R = Keydash\ H2\ (Klic\_n,\ Na\|Nb).$$

Meanwhile, the Keydash function is a hash function having a key, such that Keydash H2(Klic_n, Na∥Nb) indicates that the above data (Na∥Nb) is entered to the keydash function H2 having Klic_n as a key.

At step S14, the license manager 62 sends the response R to the DVD player 1.

The firmware 20 of the DVD player 1 at step S15 receives the response R sent from the license manager 62. At step S16, the firmware 20 verifies whether or not the response R', obtained on applying the data (Na∥Nb), of which the upper bits are of a first value Na and lower bits are of a second value Nb, to the keydash function H2 generated at step S9, is equal to the response R received at step S15.

If the key Km_n generated at step S9 is equal to the key Klic_n generated at step S13, the response R' generated at step S16 is equal to the response R received at step S15.

If the generated response R' is not equal to the received response R, the firmware 20 verifies that the license manager 62 of the personal computer 2 is not asthenic to destruct the received response R to terminate the authentication processing.

Conversely, if the generated response R' is equal to the received response R, the firmware 20 authenticates the received response.

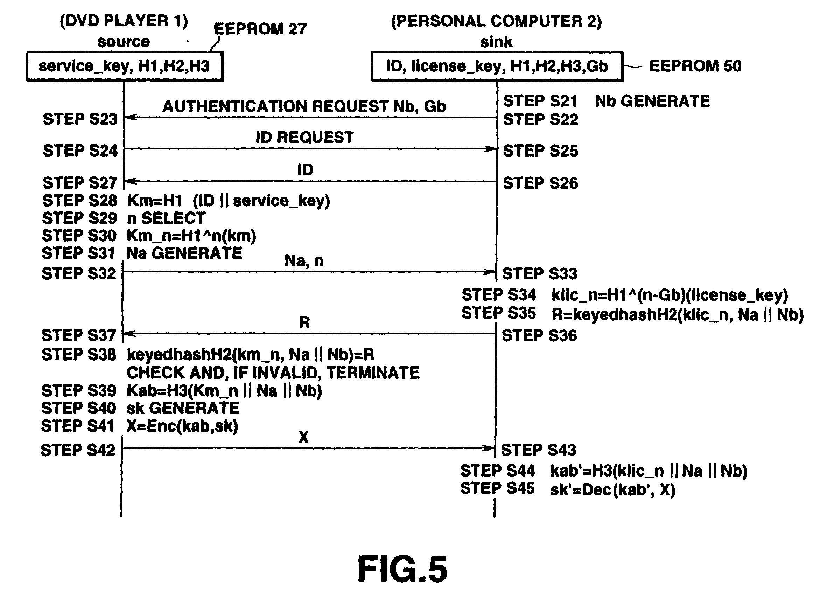

Fig.5 shows the sequence of specified authentication to be executed between the source (DVD player 1) and the sink (personal computer 2).

In the EEPROM 27 of the DVD player 1 as the source, the service key (Service_key) and the hash function (H1, H2, H3) are stored from the outset. These have been accorded by the copyright owner to the user of the DVD player 1 and kept in confidentiality in the EEPROM 27.

The service key is accorded by the copyright owner and is common to the system constructed by the IEEE 1394 serial bus 11.

In the personal computer 2, as a sink, the identification number proper to itself, the license key (license_key), hash functions (H1, H2, H3), and data Gb indicating the version of the license key (license_key), are kept in confidentiality in the EEPROM 50.

The license key (license-key) is given by

$$license\_key = H1\^Gb\ (ID\|Service\_key)$$

where H1^Gb means that the hash function h1 is applied Gb times. That is, the license key (license_key) is a value obtained on applying the hash function H1 Gb times to the n+m bit coupling data (ID∥Service_key) obtained on coupling n-bit identification number (ID) to m-bit service key (Service_key).

As the identification number(ID), node_unique_ID, prescribed in the standard of the IEEE 1394 serial bus 11, is used.

The specified processing for authentication performed prior to transmission and reception of real data is explained with reference to Fig.5.

At step S21, the license manager 62 of the personal computer 2 generates a random number Nb. At step S22, the license manager 62 controls the 1394 interface 49 to transmit the generated random number Nb and the version information Gb over IEEE 1394 serial bus 11 to the DVD player 1 along with the request for authentication.

At step S23, the firmware 20 of the DVD player 1 receives the random number Nb and the version information Gb along with the request for authentication. At the next step S24, the firmware 20 requests the identification number (ID) to the personal computer 2.

At step S25, the license manager 62 of the personal computer 2 receives the request for the identification number (ID) and, in response thereto, reads out the identification number (ID) stored in the EEPROM 50 to send the read-out identification number to the DVD player 1.

At step S27, the firmware 20 of the DVD player 1 receives the identification number (ID). At step S28, the firmware 20 reads out the license key (license_key) stored in the EEPROM 27 to connect the received identification number (ID) to the license key (license_key) to generate the coupling data of which upper bits are identification numbers (ID) and lower bits are license key (license_key). The firmware 20 then applies the hash function H1 to the generated coupling data (ID∥Service_key) by:

$$Km = H1\ (ID\|Service\_key)$$

to generate a key Km.

At the next step S29, the firmware 20 of the DVD player 1 selects a variable n which will satisfy $0 \leq n \leq C1$, where n, pre-set so as to satisfy $0 \leq n \leq C1$, need not be selected at step S29. C1 is a constant pre-set in the system. At step S30, the firmware 20 applies the hash function H1 n times for the key Km generated at step S7 as shown by the following equation:

$$Km\_n = H1^n(Km)$$

to generate the key Km_n. It is noted that $H1^n$ denotes that the hash function H1 is applied n times, such that, for $n = 0$, $Km\_n = Km$ . Also, at step S31, the firmware 20 generates a random number Na. At step S32, the firmware 20 sends the random number Na and the variable n to the personal computer 2.

At step S33, the license manager 62 of the personal computer 2 receives the random number Na and the variable n at step S34, then applies the hash function H1 to the license key (license_key) stored in the EEPROM 50 $(n - Gb)$ times, as indicated by the following equation:

$$Klic\_n = H1^{\wedge}(n - Gb) \text{ (license\_key)}$$

to generate the key Klic_n.

Meanwhile, n in $(n - Gb)$ is the variable n received at step S11, while Gb is the information specifying the version of the license key (license_key) stored in the EEPROM 50 of the personal computer 2. As discussed in the foregoing, the license key (license_key) is generated on applying the hash function H1 Gb limes to the coupling data(ID‖Service_key)) obtained on coupling the n-bit identification number (ID) to the m bit service key (Service_key). Therefore, the key Klic_ n, generated on applying the hash function $(n - Gb)$ times to the license key (license_key), is Klick_n = licencse_key for $(n - Gb) = 0$ , such that, for $(n - Gb) \geq 0$, the key Klic_n is equal to Km_n, obtained on applying the hash function H1 to the coupling data (ID‖Service_key)) n times.

If $(n - Gb) < 0$, the operation is tantamount to applying the hash function a negative number of times, that is to finding the inverse function of the hash function. However, it is difficult to find the inverse function of the hash function, as discussed above. Therefore, if $(n - Gb) < 0$, it is practically impossible to generate the key Klic_n. Thus, if this property is used, it is possible to manage the version information Gb of the license key (license_key). For example, if an equipment having a high secrecy-keeping function and an equipment having a low secrecy-keeping function are present as a sink-side device, "1" and "2" are accorded as the version information Gb of the license key (license_ key) to the equipment having the high secrecy-keeping function and to the equipment having the low secrecy-keeping function, respectively. If the license key (license_key) of Gb = 2 accorded to the equipment having the low secrecy-keeping function is discovered by an unauthorized user, the source side can select "1" for the variable n whereby $(n - Gb) < 0$ for the equipment having the low secrecy-keeping function such that the equipment is unable to generate the key Klic_n and hence is not authenticated.

Therefore, if the higher-order license key (license_key) with a larger value of the version information Gb is accorded to the equipment having a low secrecy-keeping function, so that, if the license key (license_key) has become apparent, the processing for setting the sink having the higher-order license key out of the range of authentication can be carried out on the source side by selecting the variable n.

At step S35, the license manager 62 applies to the keydash function H2, having the key Klic_n as the key, the coupling data (Na‖Nb), obtained on coupling the random number Na received at step S33, to the random number Nb, generated at step S21, to generate a response R such that

$$R = \text{Keydash H2 (Klic\_n, Na‖Nb)}.$$

Meanwhile, the Keydash function is a hash function having a key, such that Keydash H2(Klic_n, Na‖Nb) indicates that the above data (Na‖Nb) is to be entered to the keydash function H2 having klic_n as a key.

At step S36, the license manager 62 sends the response R to the DVD player 1.

The firmware 20 of the DVD player 1 at step S37 receives the response R sent from the license manager 62. At step S38, the firmware 20 verifies whether or not the response R', obtained by applying the coupling data (Na‖Nb) obtained on coupling the random number Na at step S31 to the random number Nb received at step S3, to the keydash function H2 generated at step S30, is equal to the response R' received at step S37.

If the key Km_n generated at step S30 is equal to the key Klic_n generated at step S34, the response R' generated at step S38 is equal to the response R received at step S37.

If the generated response R' is not equal to the received response R, the firmware 20 verifies that the license manager 62 of the personal computer 2 is not asthenic to destruct the received response R to terminate the authentication processing.

Conversely, if the generated response R' is equal to the received response R, the firmware 20 authenticates the received response.

At this step S39, the firmware couples the key Km_n, generated at step S30, the random number Na, generated at step S31, and the random number Nb, received at step S31, to generate coupling data (Km_n‖Na‖Nb) to which the hash function H3 is applied as shown by the following equation:

$$Kab = H3(Km\_n‖Na‖Nb)$$

to generate the key Kab.

At the next step S40, the firmware 20 generates the session key sk. The firmware 20 at step S41 encrypts the session key sk by the key Kab generated at step S39 by the calculations of the following equation:

$$X = Enc(Kab, sk)$$

to generate encrypted data (encrypted key) X. Enc(A, B) indicates that data B is encrypted, using a key A, in the common key encryption system. At step S42, the firmware 20 sends the generated encryption key X to the personal computer 2.

The license manager 62 of the personal computer 2 at step S43 receives the encryption key X. At step S44, the license manager 62 couples the key Klic_n, generated at step S34, random number Na received at step S33 and the random number Nb generated at step S21, to generate coupling data (Klic_n∥Na∥Nb), to which the hash function H3 is applied as indicated by the following equation:

$$Kab' = H3(Km\_n)\|Na\|Nb)$$

to generate the key Kab'.

At the next step S45, the license manager 62 decodes the encryption key X, received at step S43, by the key Kab' generated at step S44, to calculate the session key sk' in accordance with the following equation:

$$sk' = Dec(Kab', X)$$

in which Dec(A, B) means decoding data B using the key A in the common key encrypting system. Meanwhile, as the encryption algorithm in the common key encrypting system, there is known the DES (Data Encryption Standard). Also, the common key encrypting system is discussed in detail in the above-mentioned "Applied Cryptography (Second Edition), Wiley".

The key Kab, generated by the firmware 20 of the DVD player 1 at step S39, has the same vale as the key Kab' generated by the license manager 62 of the personal computer 2 at step S44. That is, the following equation:

$$Kab = Kab'$$

holds.

Therefore, the session key sk', obtained on decoding the encryption key X by the license manager 62 of the personal computer 2 at step S45 has the same value as the session key sk generated by the firmware 20 of the DVD player 1 at the above step S40. That is, the following equation:

$$sk' = sk$$

holds.

Thus, the firmware 20 of the DVD player 1 (source) and the license manager 62 of the personal computer 2 (sink) can furnish the same session keys sk, sk'. Therefore, the session key can directly be used as an encryption key, or respective pseudo-random numbers can be created from this and used as encryption keys.

Since the license key (license_key) is generated on the basis of the identification numbers (IDs) proper to the respective apparatus and the service key (Service_key) for the furnished information, so that it is not possible for a third apparatus to produce session keys sk or sk'. On the other hand, an apparatus not authorized by the copyright owner is not provided with a license key (license_key) and hence us unable to generate the session key sk or sk'. Therefore, if the DVD player 1 encrypts the real data using the session key sk to transmit the encrypted real data to the personal computer 2, and the personal computer 2 has appropriately acquired the license key (license_key), the personal computer 2 owns the session key sk' obtained on decoding the encryption key X, so that it can decode the encrypted real data transmitted from the DVD player 1. However, if the personal computer 2 is not an authorized one, it cannot decode the transmitted encryption key X. stated differently, only the authorized device can generate common keys sk, sk', thus realizing the authentication.

If the license key (license_ key) of the sole personal computer 2 is stolen, the identification number (ID) differs from one personal computer to another, so that it is not possible for the unauthorized device to decode the encrypted real data transmitted from the DVD player 1, thus improving the safety.

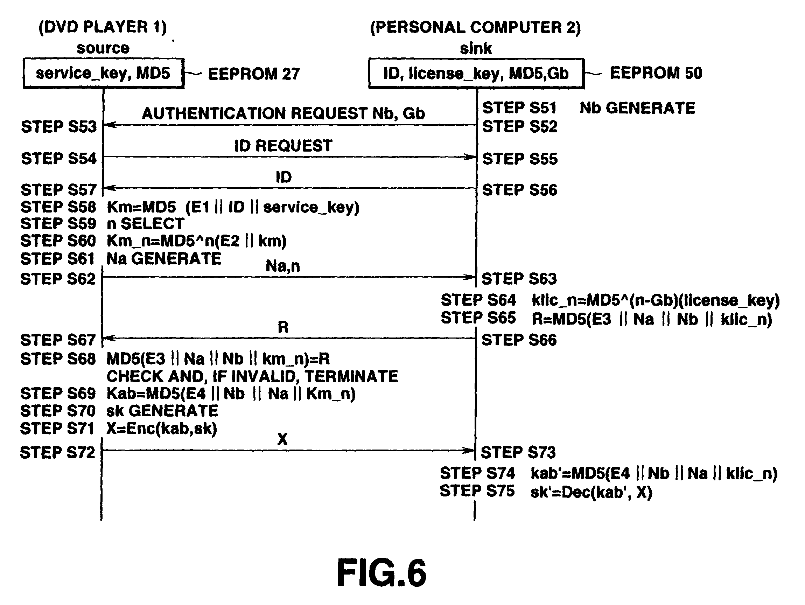

In the above-described embodiment, plural hash functions are used. However, a sole hash function can also be used. Referring to the timing chart of Fig.6, the procedure of authentication is now explained, taking an example of using a MD (message digest) widely used as a hash function.

The MD5 processes the number of bits of input data every $512 \times m - 64$ bits, where $m = 1, 2, \cdots$, to output 128 bits of output data. This MD5 is discussed in detail in the above-mentioned "Applied Cryptography (Second Edition), Wiley".

In the procedure of authentication, shown in Fig.6, the processing from step S51 to step S57 is similar to that from step S21 to S27 in the procedure of authentication processing shown in Fig.5 and hence is not explained specifically.

At step S58, the firmware 20 of the DVD player 1 couples the constant E1, identification number (ID) received from the personal computer 2, and the service key (Service_key) stored in the EEPROM 27, to generate coupling data (E1∥ID∥Service_key) to apply the hash function MD5 to the coupling data (E1∥ID∥Service_key) as indicated by the following equation:

$$Km = MD5 (E_1\|ID\|Service\_key)$$

to generate the key Km.

It is noted that the constant E1 is set in common in the system from the outset. The same holds for the constants E2 to E4 as later explained. These constants E1 to E4 are held in confidentiality in each system.

If, in the above-mentioned equation for finding the key Km, the constant E1 is 256 bits, the identification (ID) number is 64 bits and the service key (Service_key) is 128 bits, the total number of bits of the coupling data obtained on coupling these bits is 448 bits. By application of the hash function MD5, this coupling data $(E_1\|ID\|Service\_key)$ is compressed to 128 bits to operate as the key Km.

At the next step S59, the firmware 20 of the DVD player 1 selects a variable n satisfying the relation $0 \le n \le C1$. This selection of the variable n is the processing similar to that at step S29. The firmware 20 at step S60 couples the constant E2 to the key Km generated at step S58 to apply the hash function MD5 n times to the generated coupling data $(E_2\|Km)$ as indicated by the following equation:

$$Km\_n = MD5\hat{\ }n(E_2\|Km)$$

to generate the key Km_n. Meanwhile, MD5^ denotes that the hash function MD5 is applied n times such that $Km\_n = (E_2\|Km)$ for n = 0.

In the above equation for finding the key Km_n, the key Km is the 128-bit data, so that, by setting the constant E2 to 320 bits, the total number of bits of the coupling data $(E_2\|Km)$ is 48 bits. By applying the hash function MD5, the coupling data $(E_2\|Km)$ is compressed to 128 bits to give the key Km_n.

The firmware 20 at step S61 generates the random number Na. At step S62, the firmware 20 sends the random number Na generated at step S62 and the variable n selected at step S59 to the personal computer 2.

At step S63, the license manager 62 of the personal computer 2 receives the random number Na and the variable n. The license manager 62 at step S64 applies the hash function MD5 (n — Gb) times to the license key (license_key) stored in the EEPROM 50 to generate the key Klic_n.

In this case, Klic_n = license key for(n — Gb) = 0 , as explained at step S34 in the authentication procedure shown in Fig.5, such that, if(n —Gb) < 0, the key Klic_n is not generated.

At step S65, the license manager 62 couples the constant E3, random number Na received at step S63, random number Nb generated at step S51 and the key Klic_n generated at step S64, to apply the resulting coupling data $(E_3\|Na\|Nb\|Klic\_n)$ to the hash function MD5 as indicated by the following equation:

$$R = MD5(E_3\|Na\|Nb\|Klic\_n)$$

to generate the response R. If, in this equation of generating the response R, the constant E3 is 64 bits, and the random numbers Na, Nb and the key Klic_n are 128 bits, the total number of bits of the coupling data $(E_3\|Na\|Nb\|Klic\_n)$ is 448. On application of the hash function MD5, the coupling data $(E_3\|Na\|Nb\|Klic\_n)$ is compressed to 128 bits, which are outputted as the response R.

At step S66, the license manager 62 transmits the response R to the DVD player 1.

The firmware 20 of the DVD player l at step S67 receives the response R transmitted from the license manager 62. At step S68, the firmware 20 verifies whether or not the response R' obtained on coupling the constant E3, random number Na generated at step S61, random number Nb received at step S53 and the key Km_n generated at step S53 and on applying the resulting coupling data $(E_3\|Na\|Nb\|Km\_n)$ to the hash function MD5 is equal to the response received at step S67.

If the generated response R' is not equal to the received response R, the firmware 20 verifies that the license manager 62 of the personal computer 2 is unauthentic and destructs the received response R to terminate the authentication processing.

If the generated response R' is equal to the received response R, the firmware 20 proceeds to step S69.

The firmware 20 at step S69 couples the constant number E4, random number Nb received at step S53, random number Na generated at step S61 and the key Km_n generated at step S60 to generate coupling data $(E_4\|Nb\|Na\|Km\_n)$ to which the hash function MD5 is applied as indicated by the following equation:

$$Kab = MD5 (E_4\|Nb\|Na\|Km\_n)$$

to generate the key Kab. If, in the equation generating the key Kab, the constant E4 is 64 bits, the random numbers Na and Nb and the key Klic_n are 128 bits, the total number of bits of $(E_4\|Nb\|Na\|Km\_n)$ is 448 bits. By application of the hash function MD5, the coupling data $(E_3\|Nb\|Na\|Km\_n)$ is compressed to 128 bits, which are outputted as the key Kab.

At the next step S70, the firmware 20 generates the session key sk. The firmware 20 at step S71 encrypts the session key sk by the key generated at step S69 by the following processing:

$$X = Enc(Kab, sk)$$

to generate the encrypted data (encryption key) X. At step S72, the firmware 20 transmits the generated encryption key X to the personal computer 2.

The license manager 62 of the personal computer 2 at step S73 receives the encryption key X. at step S74, the license manager 62 couples the constant E4, random number Nb generated at step S71, random number Na received at step S63 and the key Klic_n generated at step S64 to generate coupling data (E4‖Nb‖Na‖Klic_n) to which the hash function MD5 is applied in accordance with the equation:

$$Kab' = MD5 (E4‖Nb‖Na‖Klic\_n)$$

to generate the key Kab'.

At the next step S75, the license manager 62 decodes the encryption key X received at step S73, by the key Kab' generated at step S74, to calculate the session key sk' by the following equation:

$$sk' = Dec (Kab', x).$$

If the same hash function MD5 is used in common in both the firmware 20 (source) of the DVD player 1 (source) and the license manager 62 of the personal computer 2, the key Kab, generated by the firmware 20 of the DVD player 1 at the above step S69, has the same value as that of the key Kab' generated by the license manager 62 of the personal computer 2 at the above step S74, and hence the following equation:

$$Kab = Kab'$$

holds.

On the other hand, the session key sk', obtained on decoding the encryption key X by the license manager 62 of the personal computer 2 at the above step S75, has the same value as the session key sk generated by the firmware 20 of the DVD player 1 at step S70, and hence the following equation:

$$sk' = sk$$

holds.

The key Kab is used for encrypting the session key sk, as described above. However, if, in consideration of the regulations on export, only a shorter bit sequence can be used, a new system-common function F is provided and used to degrade the key. This function F needs to be kept in confidentiality in the system. If, as a method for this degradation, such function F which outputs an XOR (exclusive-OR) of upper 64 bits and lower 64 bits for a 128-bit input is used, the 128-bit bit string can be degraded to a 64-bit bit string.

In the foregoing, the DVD player 1 (firmware 20) is a source, with the personal computer 2 (license manager 62) being a sink. However, it is not crucial which of the devices is to be a source and which device is to be a sink. The external bus used for interconnecting the electronic equipments may be any suitable bus without being limited to the 1398 serial bus, while the electronic equipments connected to the bus may be any suitable equipment without being limited to the above-described embodiment.

The computer program for executing the above-mentioned various commands may be transmitted to the user via a recording medium, such as a magnetic disc or a CD-ROM, or a transmission medium, such asa network, so as to be stored in the enclosed RAM or hard disc if so required.

## Claims

1. An information processing system comprising:

a first information processing apparatus and a second information processing apparatus; said first information processing apparatus including

first storage means for storing a service key and a pre-set function;

first transmission/reception means for transmitting and receiving data with the second information processing apparatus;

first intermediate key generating means for generating a first intermediate key by applying said function to the service key and to the identification information proper to the second information processing apparatus received by said first transmission/reception means from said second information processing apparatus;

decision key generating means for generating a decision key by applying said function n times to said first intermediate key, n being an integer;

number of times data transmitting means for causing said first transmission/reception means to transmit to said second information processing apparatus the number of times data indicating the number of times said function is applied by said decision key generating means to said first intermediate key; and

authentication means for authenticating said second information processing apparatus by verifying whether or not the decision key is equal to the intermediate key information received by said first transmission/reception means from said second information processing apparatus;

said second information processing apparatus including

second storage means for storing the proper identification information allocated to itself; a license key generated on applying said function to said first intermediate key Gb times, where Gb is a natural number, version data indicating the version of the license key and said pre-set function;

second transmission/reception means for sending and receiving data with said first information processing apparatus, second intermediate key generating means for generating the second intermediate key by applying said function to said license key (n — Gb) times, using said number of times data received from said first information processing apparatus by said second transmission/reception means; and

intermediate key information transmitting means for causing said second transmission/reception means to transmit the intermediate key information concerning the second intermediate key by said second transmission/reception means to said first information processing apparatus.

2. The information processing system according to claim 1 wherein said first information processing apparatus further includes first value generating means for generating a first value and for transmitting the first value by said first transmission/reception means to said second information processing apparatus; and

first calculating means for performing calculations on said decision key, said first value and a second value received by said first transmission/reception means from said second information processing apparatus to send the results of calculations to said authentication means; and wherein

said second information processing apparatus further includes second value generating means for generating the second value and for transmitting the second value to said first information processing apparatus by said second transmission/reception means; and

second calculation means for performing calculations on said second intermediate key, said second value and the first value received by said second transmission/reception means from said first information processing apparatus, to generate the intermediate key information of said second intermediate key.

3. The information processing system according to claim 2 wherein at least one of the first value generating means or the second value generating means is random number generating means for generating a random number.

4. The information processing system according to claim 1 wherein said first information processing apparatus includes setting means for setting the number of times n of application of said function to said first intermediate key by said decision key generating means; and wherein

said decision key generating means generates a decision key by applying said function to said first intermediate key by n times as set by said setting means.

5. The information processing system according to claim 2 wherein said first information processing apparatus includes encrypting key generating means for generating an encryption key by applying said function to said decision key, said first value and the second value if said authentication means verifies that the state of equality;

session key generating means for generating a session key; and

encrypting means for encrypting said session key using said encryption key and for transmitting the encrypted session key to said second information processing apparatus;

said second information processing apparatus including decoding key generating means for generating a decoding key by applying said function to said second intermediate key, said first value and the second value; and

decoding means for decoding said encrypted session key, transmitted from the first information processing apparatus, using said decoding key.

6. The information processing system according to claim 1 wherein said second information processing apparatus further includes authentication requesting means for causing said first information processing apparatus to transmit authentication request data requesting the authentication from said second transmission/reception means.

7. The information processing system according to claim 6 wherein said first information processing apparatus further includes identification information requesting data transmission means for causing said first transmission/reception means to transmit identification information requesting transmission of said identification information to said second information processing apparatus on reception of said authentication requesting data by said first transmission/reception means from said second transmission/reception means.

8. The information processing system according to claim 7 wherein said second information processing apparatus further includes identification information transmission means for causing the identification information to be transmitted from said second transmission/reception means on reception of the identification information requesting data by the second transmission/reception means from the first information processing apparatus.

9. An information processing method in an information processing system made up of a first information processing apparatus which stores a service key and a pre-set function, and a second information processing apparatus which stores the proper identification information allocated to itself, a license key generated on applying said function to said first intermediate key Gb times, where Gb is a natural number, version data specifying the version of said license key, and said pre-set function, comprising:

an identification information requesting step of requesting the identification information proper to the second information processing apparatus from the first information processing apparatus to the second information processing apparatus;

an identification information transmission/reception step of transmitting the identification information proper to the second information processing apparatus from the second information processing apparatus for reception by said first information processing apparatus;

a first intermediate key generating step of applying said function in said first information processing apparatus to the identification information proper to the second information processing apparatus, received in said identification information transmission/reception step, and on the service key, to generate said first intermediate key;

a decision key generating step of generating a decision key by applying said function in said first information processing apparatus to said first intermediate key n times, where n is an integer;

a number of times data transmission/reception step of transmitting the number of times data indicating the number of times the function is applied to the first intermediate key at said decision key generating step from said first information processing apparatus for reception by said second information processing apparatus;

a second intermediate key generating step of generating a second intermediate key Klic_n by applying said function to said license key (n — Gb) times using the number of times data received by said number of times data reception step in said second information processing apparatus;

an intermediate key information transmission/reception step of transmitting the intermediate key information as the information concerning the second intermediate key from the second information processing apparatus for reception by the first information processing apparatus; and

an authentication step of authenticating said second information processing apparatus by verifying, at said first information processing apparatus, whether or not the decision key is equal to the intermediate key information received at said intermediate key information transmission/reception step.

10. The information processing method according to claim 9 further comprising:

a first value generating step of generating a first value in said first information processing apparatus;

a first value transmission/reception step of transmitting said first value from said first information processing apparatus for reception by said second information processing apparatus;

a second value generating step of generating a second value in said second information processing apparatus;

a second value transmission/reception step of transmitting said second value from said second information processing apparatus for reception by said first information processing apparatus;

an intermediate key information generating step of generating the intermediate key information for the second intermediate key by performing calculations in said second information processing apparatus on said second intermediate key, said second value and the first value received by said first value transmission/reception step; and

a calculating step of performing calculations in said first information processing apparatus on said decision key, the first value and the second value received at said second value transmission/reception step; wherein

in said intermediate key information transmission/reception step, the intermediate key information of said second intermediate key generated by said intermediate key information generating step is transmitted from said second information processing apparatus for reception by said first information processing apparatus; and wherein

in said authentication step, said second information processing apparatus is authenticated by verifying at said authentication step whether or not the results of calculations in said calculation step are equal to the intermediate key information received by said intermediate key information transmission/reception step.

11. The information processing method according to claim 10 wherein at least one of said first and second values is given as a random number by random number generating means.

12. The information processing method according to claim 9 wherein said decision key generating step includes a setting sub-step of setting the number of times n of application of said function to said first intermediate key;

said decision key generating step generates the decision key by applying the function to said first intermediate key n times as set in said setting step.

13. An information processing method according to claim 10 further comprising:

an encryption key generating step of generating an encryption key by applying said function to said decision key, said first value and the second value if, in said first information processing apparatus, the authentication step verifies the state of equality;

a session generating step of generating a session key in said first information processing apparatus;

an encryption step of encrypting said session key in said first information processing apparatus using said encryption key;

a session key transmission/reception step of transmitting said session key encrypted at said encrypting step from said first information processing apparatus for reception by said second information processing apparatus;

a decoding key generating step of generating a decoding key by applying said function in said second information processing apparatus to said second intermediate key, said first value and the second value; and

a decoding step of decoding said encrypted session key received at said session transmission/reception step in said second information processing apparatus using said decoding key.

14. The information processing method according to claim 9 further comprising::

an authentication requesting step of transmitting authentication requesting data from said second information processing apparatus to said first information processing apparatus.

15. The information processing method according to claim 14 wherein, in said identification information requesting step, on reception of said authentication requesting data from the second information processing apparatus, the identification information requesting data for requesting the transmission of said identification information to said second information processing apparatus is transmitted from said first transmission/reception means to said second information processing apparatus.

16. The information processing method according to claim 15 wherein, in said identification information transmission/reception step, on reception of said identification information requesting data from the first information processing apparatus, said identification information is transmitted from the second information processing apparatus to said first information processing apparatus.

17. An information processing apparatus comprising:

storage means for storing a service key and a pre-set function;

transmission/reception means for transmitting and receiving data with another information processing apparatus;

intermediate key generating means for generating an intermediate key by applying said function to the identification information proper to said other information processing apparatus, received by said reception means, from said another information processing apparatus, and to said service key, to generate an intermediate key;

decision key generating means for generating a decision key by applying said function to said intermediate key n times, where n is an integer;

number of times data transmitting means for causing said transmission/reception means to transmit to said other information processing apparatus the number of times data indicating the number of times of application of said function to said intermediate key by said decision key generating means; and

authentication means for authenticating said other information processing apparatus by verifying whether or not the decision key and the intermediate key information received by said transmission/reception means from said other information processing apparatus are equal to each other.

18. The information processing apparatus according to claim 17 further comprising:

first value generating means for generating a first value and for causing said transmission/reception means to transmit said first value to said other information processing apparatus; and

calculation means for performing calculations on said decision key, said first value and a second value received by said first transmission/reception means to send the results of calculations to said authentication means.

19. The information processing apparatus according to claim 18 wherein said first value generating means is random number generating means for generating a random number.

20. The information processing apparatus according to claim 17 further comprising:

setting means for setting the number of times n of application of said function to said intermediate key;

said decision key generating means generating a decision key by applying said function to said intermediate key n times as set by said setting means.

21. The information processing apparatus according to claim 18 further comprising:

encryption key generating means for generating an encryption key by applying said function to said decision key, said first value and the second value if said authentication means verifies the state of equality;

session key generating means for generating a session key; and

encrypting means for encrypting said encryption key to transmit the encrypted session key to said other information processing apparatus.

22. The information processing apparatus according to claim 21 further comprising:

identification information requesting data transmission means for causing said first transmission/reception means to transmit identification information requesting data requesting transmission of the identification information to said other information processing apparatus on reception of authentication requesting data from said other information processing apparatus by said transmission/reception means.

23. An information processing method comprising:

an identification information reception step of requesting the identification information proper to another information processing apparatus to said other information processing apparatus to receive the identification information;

a first intermediate key generating step of generating a first intermediate key by applying a pre-set function to the identification information proper to said other information processing apparatus and the service key received by said identification information reception step;

a decision key generating step of generating a decision key by applying said function to said first intermediate key n times, n being an integer;

a number of times data transmitting step of transmitting to said other information processing apparatus the number of times data indicating the number of times of application of said function to said first intermediate key at said decision key generating step;

an intermediate key information receiving step of receiving the intermediate key information generated based on the number of times data by said other information processing apparatus; and

an authentication step of authenticating said other information processing apparatus by verifying whether or not said decision key is equal to said intermediate key information received by said intermediate key information receiving step.

24. The information processing method according to claim 23 further comprising:

a first value generating step of generating a first value;

a first value transmitting step of transmitting said first value to said other information processing apparatus;

a second value reception step of receiving a second value transmitted from said other information processing apparatus; and

a calculating step of performing calculations on said decision key, said first value and the second value received by said second value reception step;

said intermediate key information transmission/reception step receiving the intermediate key information generated in said other information processing apparatus based on said second intermediate key, said second value and the first value;

said authentication step authenticating said second information processing apparatus based on the results of calculations in said calculation step and by verifying whether or not the results of calculations at said calculating step, said decision key and the intermediate key received at said intermediate key information receiving step are equal to each other.

25. The information processing method according to claim 24 wherein said first value is given as a random number by random number generating means.

26. The information processing method according to claim 23 wherein said decision key generating step includes a setting sub-step of setting the number of times n of application of said function to aid first intermediate key;

said decision key generating step generating the decision key by applying the function n times as set in said setting step.

27. The information processing method according to claim 24 further comprising:

an encryption key generating step of generating an encryption key by applying said function to said decision key, said first value and the second value if, in said first information processing step, the authentication step verifies equality;

a session generating step of generating a session key;

an encryption step of encrypting said session key using said encryption key; and

a session key transmission/reception step of transmitting said session key encrypted at said encrypting step.

28. The information processing method according to claim 27 wherein, in said identification information requesting step, on reception of authentication requesting data from said other information processing apparatus, identification information requesting data for requesting transmission of the identification information to said other information processing apparatus is transmitted to said other information processing apparatus.

29. An information processing apparatus comprising:

storage means for storing the proper identification information assigned to itself, a license key generated by applying a pre-set function Gb times, Gb being a natural number, to a first intermediate key, version data specifying said license key and said pre-set function;

transmission/reception means for transmitting and receiving data with another information processing apparatus;

second intermediate key generating means for generating a second intermediate key by applying said function to said license key (n — Gb) times using said number of times data received from said other information processing apparatus by said transmission/reception means; and

intermediate key information transmitting means for transmitting the intermediate key information as the information on said second intermediate key by said second transmission/reception means to said first information processing apparatus.

30. The information processing apparatus according to claim 29 comprising:

second value generating means for generating a second value and transmitting said second value by said second transmission/reception means to said first information processing apparatus; and

calculating means for performing calculations on the second intermediate key, said second value and the first value received from said other information processing apparatus by said transmission/reception means to generate the intermediate key information on said second intermediate key.

31. The information processing apparatus according to claim 30 wherein said second value generating means is random number generating means for generating a random number.

32. The information processing apparatus according to claim 29 further comprising:

authentication requesting means for causing authentication requesting data to be transmitted from said transmission/reception means to said other information processing apparatus.

33. The information processing apparatus according to claim 29 further comprising:

identification information transmitting means for causing the identification information to be transmitted from the transmission/reception means on reception of said identification information requesting data from said transmission/reception means by the transmission/reception means.

34. An information processing method comprising:

an identification information transmitting step of transmitting the proper identification information assigned to an own information processing apparatus to another information processing apparatus;

a number of times data receiving step of receiving from said other information processing apparatus number of times data n of applying a pre-set function to said identification information and to a service key, where n is an integer, for generating said first intermediate key in said other information processing apparatus;

a second intermediate key generating step of generating a second intermediate key Klic_n by applying said function (n — Gb) times, using number of times data received in said number of times data receiving step, to a license key generated by applying said function Gb times to said first intermediate key, Gb being a natural number; and

an intermediate key information transmission/reception step of transmitting the intermediate key information as the information on said second intermediate key.

35. The information processing method according to claim 34 further comprising:

a first value receiving step of receiving a first value from said other information processing apparatus;

a second value transmission/reception step of generating a second value;

a second value transmission/reception step of transmitting said second value to said other information processing apparatus; and

an intermediate key information generating step of generating the intermediate key information of said second intermediate key by performing calculations on said second value and said first value received by said first value transmission/reception step;

said intermediate key information transmission/reception step transmitting the intermediate key information on said second intermediate key generated by said intermediate key information generating step to said other information processing apparatus.

36. The information processing method according to claim 35 wherein said second value is given as a random number from random number generating means.

37. The information processing method according to claim 35 comprising:

a session key transmission/reception step for receiving from said first information processing apparatus a session key encrypted using an encryption key generated by applying said function to said decision key, said first value and to the second key;

a decoding key generating step of generating a decoding key by applying said function to said second intermediate key, said first value and to the second value; and

a decoding step of decoding said encrypted session key received in said session key transmission/reception step, using said decoding key.

38. The information processing method according to claim 34 further comprising:

an authentication requesting step of transmitting authentication requesting data for requesting the authentication to said first information processing apparatus. 39. The information processing method according to claim 38 wherein said identification information transmission/reception step transmits the identification information to said first information processing apparatus on reception of identification information requesting data from said other information processing apparatus.

EP 0 966 127 A1

| | | |
|---|---|---|
| DATA BROADCAST RECEPTION DEVICE | PERSONAL COMPUTER | TELEVISION RECEIVER |

DVD PLAYER

MAGNETO-OPTICAL DISC DEVICE

MONITOR

**FIG.1**

**FIG.2**

**FIG.3**

EP 0 966 127 A1

(DVD PLAYER 1)
source    EEPROM 27

(PERSONAL COMPUTER 2)
sink

| service_key, H1, H2 |

| ID, license_key, H1, H2, Gb | ~ EEPROM 50

STEP S2    ←———————— AUTHENTICATION REQUEST ————————    STEP S1

STEP S3    ——————————————— ID REQUEST ———————————————→    STEP S4

STEP S6    ←—————————————————— ID ———————————————————    STEP S5

STEP S7    $Km = H1 \ (ID \parallel service\_key)$

STEP S8    n SELECT

STEP S9    $Km\_n = H1^{\wedge}n(km)$    n

STEP S10    ——————————————————————————————→    STEP S11

STEP S12    $klic\_n = H1^{\wedge}(n-Gb)(license\_key)$

STEP S13    $R = keyedhashH2(klic\_n, Na \parallel Nb)$

STEP S15    ←——————————————— R ———————————————    STEP S14

STEP S16    $keyedhashH2(km\_n, Na \parallel Nb) = R$

CHECK AND, IF INVALID, TERMINATE

# FIG.4

EP 0 966 127 A1

**(DVD PLAYER 1)**   EEPROM 27       **(PERSONAL COMPUTER 2)**
**source**                            **sink**

| service_key, H1,H2,H3 | | ID, license_key, H1,H2,H3,Gb | — EEPROM 50 |

STEP S23 ◄—— AUTHENTICATION REQUEST Nb, Gb ——| STEP S21   Nb GENERATE
                                                STEP S22

STEP S24 ——————— ID REQUEST ———————————► STEP S25

STEP S27 ◄——————————— ID ———————————————| STEP S26

STEP S28  Km=H1  (ID ‖ service_key)
STEP S29  n SELECT
STEP S30  Km_n=H1^n(km)
STEP S31  Na GENERATE            Na, n
STEP S32 |————————————————————————————————► STEP S33

                                  STEP S34   klic_n=H1^(n-Gb)(license_key)
                                  STEP S35   R=keyedhashH2(klic_n, Na ‖ Nb)

STEP S37 ◄———————————— R ————————————————| STEP S36

STEP S38  keyedhashH2(km_n, Na ‖ Nb)=R
          CHECK AND, IF INVALID, TERMINATE
STEP S39  Kab=H3(Km_n ‖ Na ‖ Nb)
STEP S40  sk GENERATE
STEP S41  X=Enc(kab,sk)             X
STEP S42 |————————————————————————————————► STEP S43

                                  STEP S44   kab'=H3(klic_n ‖ Na ‖ Nb)
                                  STEP S45   sk'=Dec(kab', X)

# FIG.5

EP 0 966 127 A1

(DVD PLAYER 1)　　　　　　　　　　　　　(PERSONAL COMPUTER 2)
　　　source　　　　　　　　　　　　　　　　　sink

| service_key, MD5 | ～ EEPROM 27 | | ID, license_key, MD5,Gb | ～ EEPROM 50 |

STEP S53 ◄—— AUTHENTICATION REQUEST Nb, Gb ——— STEP S51　　Nb GENERATE
　　　　　　　　　　　　　　　　　　　　　　　　　　　STEP S52

STEP S54 ——————— ID REQUEST ——————————► STEP S55

STEP S57 ◄——————————— ID ——————————————— STEP S56

STEP S58　Km=MD5　(E1 || ID || service_key)
STEP S59　n SELECT
STEP S60　Km_n=MD5^n(E2 || km)
STEP S61　Na GENERATE
　　　　　　　　　　　　　　　　　Na,n
STEP S62 ———————————————————————————————► STEP S63

　　　　　　　　　　　　　　　　　　　　　　　　　　　STEP S64　klic_n=MD5^(n-Gb)(license_key)
　　　　　　　　　　　　　　　　　　　　　　　　　　　STEP S65　R=MD5(E3 || Na || Nb || klic_n)
　　　　　　　　　　　　　　　　　R
STEP S67 ◄——————————————————————————————— STEP S66

STEP S68　MD5(E3 || Na || Nb || km_n)=R
　　　　　　　CHECK AND, IF INVALID, TERMINATE
STEP S69　Kab=MD5(E4 || Nb || Na || Km_n)
STEP S70　sk GENERATE
STEP S71　X=Enc(kab,sk)
　　　　　　　　　　　　　　　　　X
STEP S72 ———————————————————————————————► STEP S73

　　　　　　　　　　　　　　　　　　　　　　　　　　　STEP S74　kab'=MD5(E4 || Nb || Na || klic_n)
　　　　　　　　　　　　　　　　　　　　　　　　　　　STEP S75　sk'=Dec(kab', X)

# FIG.6

| INTERNATIONAL SEARCH REPORT | International application No. |
|---|---|
| | PCT/JP98/06007 |

A. CLASSIFICATION OF SUBJECT MATTER
   Int.Cl⁶ H04L9/32, H04N5/91

According to International Patent Classification (IPC) or to both national classification and IPC

B. FIELDS SEARCHED

Minimum documentation searched (classification system followed by classification symbols)
   Int.Cl⁶ H04K1/00-3/00, H04L9/00-9/38, G09C1/00-5/00

Documentation searched other than minimum documentation to the extent that such documents are included in the fields searched

Electronic data base consulted during the international search (name of data base and, where practicable, search terms used)
   JICST File (JOIS), INSPEC (DIALOG)

C. DOCUMENTS CONSIDERED TO BE RELEVANT

| Category* | Citation of document, with indication, where appropriate, of the relevant passages | Relevant to claim No. |
|---|---|---|
| A | Leslie Lamport, "Password Authentication with Insecure Communication," Communications of the ACM, Vol. 24, No. 11, (1981), p.770-772 | 1-39 |
| A | JP, 10-003256, A (Sony Corp.), 6 January, 1998 (06. 01. 98) (Family: none) | 1-39 |
| PA | JP, 10-171903, A (Nippon Telegraph & Telephone Corp.), 26 June, 1998 (26. 06. 98) (Family: none) | 1-39 |

☐ Further documents are listed in the continuation of Box C.　　☐ See patent family annex.

| * Special categories of cited documents: | "T" later document published after the international filing date or priority |
|---|---|
| "A" document defining the general state of the art which is not considered to be of particular relevance | date and not in conflict with the application but cited to understand the principle or theory underlying the invention |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 10 March, 1999 (10. 03. 99) | 23 March, 1999 (23. 03. 99) |

| Name and mailing address of the ISA/ | Authorized officer |
|---|---|
| Japanese Patent Office | |
| Facsimile No. | Telephone No. |

Form PCT/ISA/210 (second sheet) (July 1992)